# EUROPEAN PATENT APPLICATION

(11) **EP 4 813 604 A1**
(43) Date of publication of application: **30.09.2026**
(21) Application number: 25220554.7
(22) Date of filing: 03.12.2025
(51) Int. Cl.: B29C 45/17

(54) **BEAM, MANUFACTURING METHOD, AND MOULD FOR FLUID INJECTION MOULDING WITH STRUCTURAL ADAPTABILITY**

(30) Priority: 27.03.2025 PT 2025120155
(71) Applicant: Simoldes Plasticos SA, 3720-502 Santiago de Riba-UL (PT)
(72) Inventor: DUARTE DIAS, Tony Filipe, 3720-502 SANTIAGO DE RIBA-UL (PT); DE PINHO GOMES, Nuno Filipe, 3720-502 SANTIAGO DE RIBA-UL (PT); DA SILVA COSTA, Maria Teresa, 3720-502 SANTIAGO DE RIBA-UL (PT); PEREIRA MAGALHÃES, Joao, 4520-145 SANTA MARIA DA FEIRA (PT)
(74) Representative: Patentree

(57) **Abstract**

The present invention relates to an injection-moulded part produced using a combination of fluid injection and projectile injection moulding processes. The part comprises a body extending along a longitudinal axis with at least one hollow channel formed within its wall. The hollow channel is created by displacing a rigid projectile using a work-fluid during the moulding process, ensuring precise control over the wall thickness and structural characteristics. The invention also relates to an injection mould and method. The method enables the production of lightweight, high-strength beam components with varying structural properties within a single mould. Additionally, the invention encompasses a vehicle incorporating such moulded beam parts. This disclosure improves material efficiency, enhances mechanical performance, and reduces weight in technical structures, contributing to improved fuel and/or energy efficiency and sustainability.

## Description

### TECHNICAL FIELD

The present technology falls within the technical field of structural components, particularly injection-moulded beam parts. It relates to the design and manufacturing of lightweight and high-performance beam parts with a focus on reducing environmental impact, promoting recyclability and circularity, which can be applied in the production of articles for technical applications, such as automotive components, consumer goods, appliances, furniture, electronics housings, and packaging.

In particular, the present disclosure relates to an injection-moulded part, obtainable by fluid injection moulding, comprising a hollow channel obtained by a moving rigid projectile wherein the cross-section of the rigid projectile has been pre-defined for a predetermined thickness of the wall and internal channel shape.

### BACKGROUND

Beams are essential structural components used, for example, in both interior and exterior vehicle applications, providing support, reinforcement, and/or energy absorption in various parts of the vehicle. These beams are widely used in door panels, bumpers, bonnets, cross beams, roof rails, and other critical structural areas. Traditionally, high-performance beams are manufactured from steel or aluminium alloys, chosen for their high mechanical strength and controlled deformation properties. However, conventional designs often involve multiple welded or assembled parts, resulting in complex and heavy structures that negatively impact the overall efficiency of the technical application.

One of the major challenges associated with metallic beams is their high environmental impact during both production and use. Manufacturing processes such as casting, rolling, and heat treatment require large amounts of energy and contribute significantly to greenhouse gas emissions. Additionally, when applied to vehicles, the relatively high weight of metal beams increases fuel consumption in internal combustion engine vehicles and reduces the range of electric vehicles, leading to a higher carbon footprint over the vehicle's lifetime.

Another key issue is the corrosion susceptibility of metal alloys, which requires protective treatments such as galvanization or the application of anti-corrosion coatings. While these treatments improve durability, they add complexity and cost to the manufacturing process and often involve the use of chemicals that may have a negative environmental impact.

The high processing temperatures required for metallic components also presents limitations. Metal beams must undergo heat treatments and forming processes at elevated temperatures, which increase energy consumption and make it difficult to integrate lightweight or advanced materials that could optimize structural performance. This incompatibility slows down the transition to more efficient and sustainable solutions that balance performance, weight reduction, and recyclability.

Additionally, conventional multi-piece welded beam designs introduce further complications in manufacturing, maintenance, and structural integrity. Welding and mechanical joining methods can create stress points and weak areas in the structure, potentially reducing overall strength and impact resistance. These limitations have driven industry efforts toward the development of alternative materials and production methods, such as composites and hybrid materials, which can provide an improved balance between mechanical performance, sustainability, and cost-effectiveness.

Another critical consideration, in a possible embodiment, is the end-of-life management of automotive beams, which is essential for aligning the automotive industry with recycling and circular economy principles. The dismantling and separation processes can be complex and inefficient. Investing in designs that facilitate material recovery and reuse is crucial for reducing environmental impact. Alternatively, the development of hybrid or composite materials must be accompanied by efficient recycling strategies, ensuring that the shift toward lighter and more sustainable solutions does not compromise vehicle circularity. These efforts contribute to waste reduction, decreased reliance on virgin raw materials, and a more sustainable lifecycle for automotive components.

In response to the challenges posed by metallic beams, polymeric and composite-based beams have been developed as alternative solutions, offering advantages such as weight reduction, corrosion resistance, and improved energy efficiency in production and usage.

Injection moulding is a common process for manufacturing polymeric beam parts, offering high dimensional precision and repeatability. However, it presents significant drawbacks in terms of tooling cost and design flexibility. The process requires a dedicated mould for each beam geometry, size, or application-specific variation, resulting in high upfront investment when multiple configurations are needed.

Moreover, injection moulding does not permit the production of beam part variants with different mechanical properties - such as stiffness, energy absorption, or thermal resistance - using the same mould, thereby limiting adaptability in multi-performance environments. This lack of flexibility poses challenges in automotive and structural applications, where tailored performance and rapid design iteration are often required.

Furthermore, many polymeric beams are designed as multi-part assemblies, requiring adhesive welded bonding or mechanical fastening, which not only complicates production but also introduces structural weak points and jeopardize end of life treatment.

A key challenge in the field is thus the development of a single-part polymeric beam that combines high mechanical performance, precise thickness control, and adaptability for various automotive applications and mechanical requirements at lower Life cycle assessment while minimizing the number of moulds required for different functional designs.

Document CN109895865A discloses a cross car beam assembly with a composite beam structure and a reinforcement. The composite beam structure extends transversely across a vehicle. The vehicle floor bracket is disposed below the composite beam. The composite reinforcement has a first portion fixedly engaged to the beam structure and a second portion engaged to the vehicle floor bracket.

Document US2024091997A1 discloses a method of producing a structure for a component for a vehicle interior may comprise providing a mold with an insert in a cavity, providing resin into the cavity, providing water into the cavity to push a projectile element through the insert into resin in the cavity, pushing the projectile element through the insert and resin across the cavity. The structure may comprise the insert and molded resin. The insert may comprise a metal insert (pipe, tube, etc.). The projectile element may comprise a multi-stage projectile element with a base stage separable from a front stage during forming of the structure. The structure may comprise a second section and a first section with a larger inner diameter than the second section. The insert may be provided in the first section. The base stage may remain in the formed resin structure between the first and second section.

Document US2011254184A1 discloses a method for injection moulding of a moulded part, which has at least two different sections being different in the outer diameter, wherein a void is produced in the inner of the moulded part by causing a projectile in the direction of a longitudinal axis of the moulded part through the still molten injection mouldable material in a direction of flow, where to a pressurized fluid is exerted in the void in the direction of flow behind the projectile which moves the projectile into the direction of flow. To obtain constant wall thicknesses in the case that the outer dimensions of the moulded parts are changing the described technology on the mentioned document is characterized in that a projectile is used which comprises at least one elastic or plastic section, which section is delimited by a space in which the pressurized fluid can enter when causing the projectile to move, wherein the volume of the space and for this reason the effective outer diameter of the projectile can be changed in dependency of the fluid pressure, wherein the pressure of the pressurized fluid and/or the pressure in the melt or a process factor being dependent from the pressures is controlled in such a manner that the space and for this reason the effective outer diameter of the projectile is enlarged and/or reduced in such a way that the effective outer diameter of the projectile has a predetermined value at least in sections along the feeding path in the direction of flow. Furthermore, the document also relates to an apparatus for injection moulding of a moulded part.

These facts are disclosed in order to illustrate the technical problem addressed by the present disclosure.

### GENERAL DESCRIPTION

The present disclosure relates to the technical field of structural components, particularly injection-moulded beam parts. It relates to the design and manufacturing of lightweight and high-performance injection-moulded beam parts with a focus on reducing environmental impact, promoting recyclability and circularity, especially in the context of end-of-life vehicle management.

Polymeric and composite-based beam parts, developed as alternative solutions, can be manufactured using fluid injection moulding, a process that allows for complex geometries and high production efficiency and flexibility, withing the same mould. However, conventional polymeric beams produced with this technology face limitations that hinder their widespread adoption. One major issue is thickness control, as maintaining uniform wall thickness in fluid injection-moulded parts can be challenging, leading to potential weak spots or material inconsistencies. The present disclosure addresses these problems by providing a novel solution that ensures improved thickness control, enhanced mechanical reliability, reproducible processes, and reduced manufacturing costs, while providing the advantages of high efficiency and design flexibility.

The solution of the present disclosure allows for a wide range of mechanical performance of the injection-moulded part without the need to modify the mould itself.

The aforementioned limitations are tackled through the combination of fluid and projectile injection, using projectiles with different diameters, for adapting to different injection-moulded beam part solutions. Moreover, in a further embodiment, the solution may encompass also the inclusion of organosheets or unidirectional (UD) tapes of varying thicknesses and fibre compositions (e.g., glass, carbon fibers), as well as the selective inclusion of continuous fibre profiles that can vary in number, cross-sectional geometry, and material type, further increasing the design flexibility of the proposed injected-moulded parts. Such configurability allows for a wide range of mechanical performance outcomes - such as stiffness, impact resistance, and energy absorption - without the need to modify the mould itself.

Considering that mould cost is one of the most critical factors in injection moulding, often limiting its application to high-volume production, this flexibility represents a significant advantage by enabling product customization and performance tuning at a much lower tooling investment.

An aspect of the disclosure relates to an injection-moulded part (1), obtainable by fluid injection moulding, comprising:
a body (2) extending along a longitudinal axis; and
a hollow channel (4) formed within a wall (3) of the body (2) and extending along the longitudinal axis of the body (2);
wherein the hollow channel (4) and respective wall (3) are obtainable by a moving rigid projectile (9) driven by a work-fluid (13) along an injection mould cavity (11) during fluid injection moulding; and
wherein a cross-section of the rigid projectile (9) has been pre-defined for a predetermined thickness of the wall (3) producing different wall thicknesses and internal channel shape, tuning mechanical performance and weight to the exact need, without modifying the mould.

In a further embodiment, the injection-moulded part comprises:
a plurality of hollow channels (4) each formed within a wall (3) of the body (2) and extending along the longitudinal axis of the body (2);
wherein each of the plurality of hollow channels (4) and respective walls are obtainable by a moving rigid projectile (9) driven by a work-fluid along the injection mould cavity (11) during fluid injection moulding, and
wherein a cross-section of the rigid projectile (9) has been preselected for a predetermined thickness of the wall tuning, mechanical performance and weight to the exact need.

In a further embodiment, the injection-moulded part comprises a web of ribs (7) connecting between walls of the body.

In an embodiment, the injection-moulded part comprises a plurality of continuous fibre profiles (5) arranged longitudinally within the body of said injection-moulded part for mechanical reinforcement.

In a further embodiment, each one of the plurality of fibre profiles (5) comprises at least one of carbon fibres, glass fibres, aramid fibres, basalt fibres, boron fibres, Polyester fibres, ceramic fibers, natural fibres or a combination thereof.

In an embodiment, the injection-moulded part comprises unidirectional (UD) tapes and/or organosheets (6) overmoulded within a body wall for localized mechanical reinforcement with a certain thickness and composition preselected to fit with exact stiffness required.

In a further embodiment, the unidirectional (UD) tapes and/or organosheets (6) comprises at least one of carbon fibres, glass fibres, aramid fibres, basalt fibres, boron fibres, Polyester fibres, ceramic fibers, natural fibres or a combination thereof.

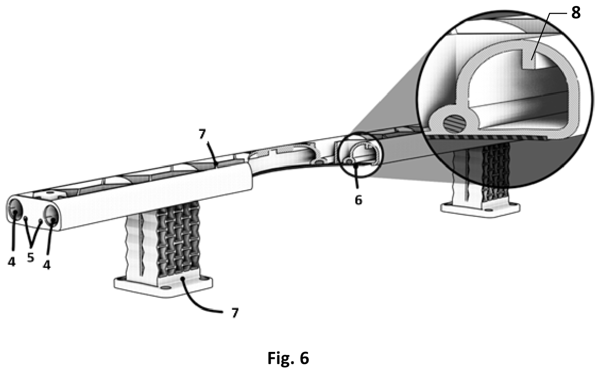

In an embodiment, the injection-moulded channels comprises internal rib for local reinforcement of the channels walls, as illustrated in fig 6.

In an embodiment, the injection-moulded channels comprises several internal ribs to increase mechanical performance at low weigh and reduces injection molding cycle time.

In an embodiment the injection-moulded part comprises at least one crash box (8) moulded as an integral part of said part, for impact energy absorbing.

In an embodiment, the work-fluid for fluid injection is selected from a gas, such as nitrogen or carbon dioxide, a liquid, such as water, or a gas-liquid mixture.

In an embodiment, the body (2) is made of a material selected from the group consisting of polymers groups such as: polyethylene group (PE), polypropylene group (PP), polyethylene terephthalate group (PET), Polybutylene terephthalate group (PBT), polycarbonate group (PC), Acrylonitrile Butadiene Styrene group (ABS), acrylonitrile styrene acrylate (ASA), styrene acrylonitrile (SAN), polyarylamide group (PARA), polyamide group (PA), Polymethyl methacrylate group (PMMA), Polyacetal group (POM), Polytetrafluoroethylene (PTFE) or mixtures thereof; preferably wherein the thermoplastic material is a bio-thermoplastic, recycled content-thermoplastic and/or a recyclable- thermoplastic.

In an embodiment, at least one hollow channel (4) is configured to accommodate cables for electrical components or other functional elements, thereby enabling the integration of electrical wiring, sensors, or additional systems within the structure of the injection-moulded part.

An aspect of the present disclosure relates to an injection-moulded beam part comprising the injection-moulded part.

In an embodiment, the injection-moulded beam part is applied in an automotive component, consumer good, appliance, furniture, electronics housing, and packaging.

In an embodiment the injection-moulded beam part is as a door panel beam (21), a bonnet beam (22), a bonnet latch beam (23), a bumper beam (24), a cross beam (25), a roof rail beam (26), a roof rack bar beam (27), a roof bow beam (28), a side step beam (29), a roll bar beam (30), or a bull bar beam (31).

A further aspect of the present disclosure relates to a vehicle comprising at least one injection-moulded beam part (1; 21, 22, 23, 24, 25, 26, 27, 28, 29, 30, 31).

A further aspect of the present disclosure relates to an injection mould for manufacturing an injection-moulded part (1; 21, 22, 23, 24, 25, 26, 27, 28, 29, 30, 31), the mould comprising:
a cavity (11) defining an external shape of the part;
at least one injection gate (12) for introducing a polymer (10) into the cavity;
at least one work-fluid injection inlet for introducing a work-fluid (13) into a molten polymer (10) during moulding;
at least one projectile injection system configured to introduce at least one fluid-driven rigid projectile (9) into the molten material to form at least one hollow channel (4) along a longitudinal axis of the beam;
wherein a cross-section of the rigid projectile (9) has been pre-defined for a predetermined thickness of the wall (3) to enable the production of parts with varying structural characteristics within the same mould.

A further aspect of the present disclosure relates to an injection method for manufacturing an injection-moulded part, the method comprising the steps of:
providing an injection mould;
introducing at least one rigid projectile (9) into the mould cavity (11);
injecting a molten polymer (10) into the mould cavity (11) through an injection gate (12) of the mould;
injecting a work-fluid (13) to displace said at least one rigid projectile (8) to create at least one hollow channel (3) extending along a longitudinal axis of the mould cavity;
cooling and demoulding the mould to obtain an injection-moulded part;
wherein a cross-section of the rigid projectile (9) has been preselected for a predetermined thickness of the wall (3) to enable the production of parts with varying structural characteristics within the same mould.

In an embodiment, the method includes introducing a plurality of continuous fibre profiles (5) into the mould cavity (11) before polymer injection for mechanical reinforcement of the injection-moulded part obtained.

In an embodiment, the method includes introducing unidirectional (UD) tapes and/or organosheets into the mould cavity (11) before polymer injection for localized mechanical reinforcement of the injection-moulded part obtained.

In an embodiment, the method includes comprising forming ribs (7) within the obtained part through controlled displacement of the work-fluid; wherein the mould comprises variable thickness regions to guide a flow of molten polymer and work-fluid.

### BRIEF DESCRIPTION OF THE DRAWINGS

The following figures provide preferred embodiments for illustrating the disclosure and should not be seen as limiting the scope of invention.
**Figure 1****:** schematic representation of an embodiment of an injection-moulded beam part, in particular a frontal partial section view, wherein:
   **1** represents an injection-moulded part;
   **2** represents a body extending along a longitudinal axis;
   **3** represents a wall of the body;
   **4** represents a hollow channel; and
   **9** represents a rigid projectile for forming said hollow channels.
**Figure 2****:** schematic representation of an embodiment of an injection-moulded beam part, in particular a lateral partial section view, wherein the additional reference signs:
   **1** represents an injection-moulded part;
   **4** represents a hollow channel;
   **5** represents continuous fibre profiles;
   **6** represents unidirectional (UD) tapes and/or organosheets;
   **7** represent ribs; and
   **8** represents a crash box, such as a bumper beam crash box;
**Figure 3****:** schematic illustration of the projectile fluid-driven projectile Injection moulding technique according to the present disclosure, wherein:
   **9** represents a rigid projectile for forming said hollow channels;
   **10** represents a polymer;
   **11** represents an injection mould cavity;
   **12** represents an injection gate; and
   **13** represents a work-fluid;
**Figure 4****:** schematic illustration of a vehicle comprising a plurality of injection-moulded beam parts according to the present disclosure, wherein:
   **20** represents a vehicle;
   **21** represents door panel beam;
   **22** represents bonnet beam;
   **23** represents bonnet latch beam;
   **24** represents bumper beam;
   **25** represents cross beam;
   **26** represents roof rail beam;
   **27** represents roof rack bar beam; and
   **28** represents roof bow beam.

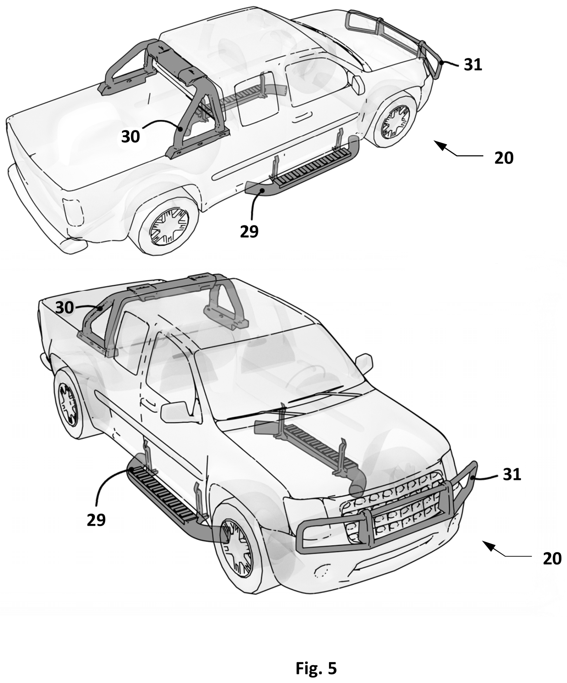

**Figure 5****:** schematic illustration of a vehicle, in particular a pick-up truck, in another embodiment according to the present disclosure, comprising a plurality of injection-moulded beam parts, wherein:
   **20** represents a vehicle;
   **29** represents a side step beam;
   **30** represents a roll bar beam; and
   **31** represents a bull bar beam.
**Figure 6****:** schematic representation of an embodiment of an injection-moulded beam part, in particular a lateral partial section view, wherein the additional reference signs:
   **4** represents a hollow channel;
   **5** represents continuous fibre profiles;
   **6** represents unidirectional (UD) tapes and/or organosheets;
   **7** represent ribs;
   **8** represents internal channel ribs.

### DETAILED DESCRIPTION

The present invention relates to an injection-moulded part, produced using a combination of fluid injection, projectile injection moulding processes and, in particular, fibres reinforcement. The part comprises a body extending along a longitudinal axis with at least one hollow channel formed within its wall. The hollow channel is created by displacing a rigid projectile using a work-fluid during the moulding process, ensuring precise control over the wall thickness and structural characteristics. The technology also relates to an injection mould and method. The method enables the production of lightweight, high-strength beam components with varying structural properties within a single mould adjusting the weigh and mechanical performance to the exact need for the application. Additionally, the description also encompasses a vehicle incorporating such moulded beam parts. This disclosure improves material efficiency, enhances mechanical performance, and reduces weight in structures, contributing, for example and dependent on the specific embodiment, to improved fuel and/or energy efficiency and sustainability and easy recycling process in the end of life allowing single-step mechanical recycling.

The injection-moulded part disclosed in the present disclosure is surprisingly able to, through the use of a pre-defined rigid projectile, change mechanical properties without changing the mould.

The present disclosure relates to an injection-moulded part, specifically a structurally reinforced beam with at least one hollow channel formed via a fluid injection moulding process. The beam structure is designed to provide optimized mechanical properties while reducing weight, making it suitable, for example, for both interior and exterior automotive applications, i.e., beams that are exposed to external conditions as well as beams incorporated within the vehicle's internal structure.

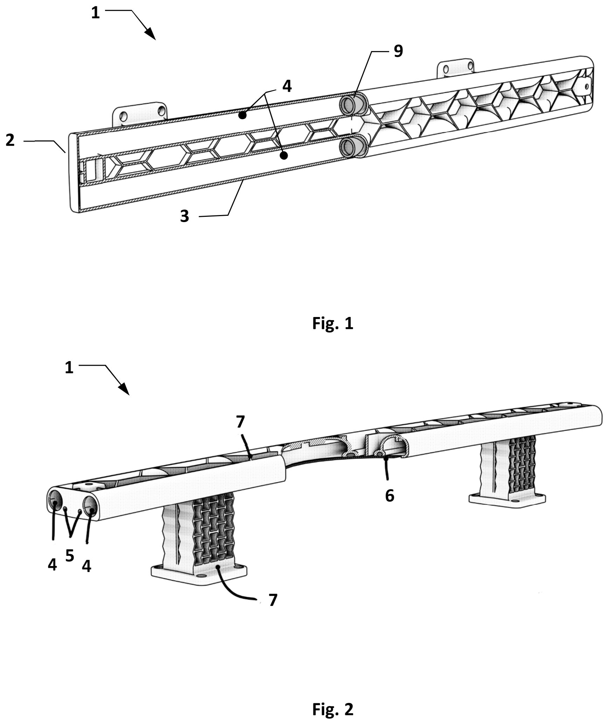

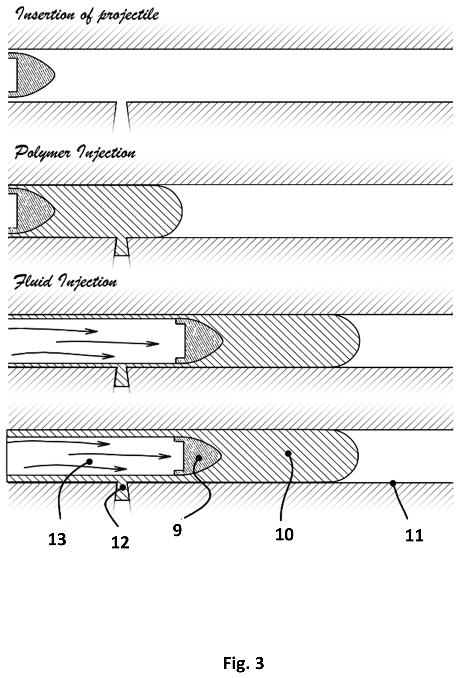

In an embodiment, as illustrated in Figure 1, the injection-moulded (beam) part (1) comprises a body (2) extending along a longitudinal axis, with a plurality of hollow channels (4) formed within the wall (3) of the body. These hollow channels (4) are created using a fluid-driven projectile injection moulding technique, wherein a rigid projectile (9) is propelled through the molten polymer (10) within an injection mould cavity (11) by a work-fluid (13), as depicted in Figure 3. The movement of the rigid projectile (9) displaces the molten polymer, forming a defined hollow channel (4) that extends along the longitudinal axis of the beam. The cross-section of the rigid projectile (9) is preselected to control the thickness of the surrounding wall (3), thereby enabling structural fitting to the exact need improving fuel and/or energy efficiency and sustainability.

In an embodiment, a plurality of hollow channels (4) is formed within the walls (3), extending along the longitudinal axis of the body (2), as shown in Figure 2. These channels (4) enhance the mechanical performance of the beam part while minimizing weight. The shape and size of each hollow channel (4) are dependent on the choice of diameter and geometry of the rigid projectile (9), allowing adaptation to different structural requirements for applications.

In an embodiment, the injection-moulded beam part further comprises a web of ribs (7) interconnecting different sections of the body (2), as shown in Figures 1 and 2. In an embodiment, the ribs (7) are formed within the body of the beam part using a fluid injection moulding process, enhancing structural integrity by providing additional reinforcement at critical load-bearing regions. The configuration of the hollow channels (4) and their surrounding structure forms a lattice-like arrangement, which contributes to the beam's rigidity and impact resistance. This lattice of ribs (7) and hollow channels (4) distributes mechanical stresses efficiently, resulting in a lightweight yet highly rigid structure.

To further enhance mechanical properties, the part can be reinforced with continuous fibre profiles (5) embedded longitudinally within the body (2), as illustrated in Figure 2. These profiles (5) can be made of carbon fibres, glass fibres, aramid fibres, basalt fibres, boron fibres, ceramic fibers, polyester fibres, natural fibres or a combination thereof, providing increased tensile strength, stiffness, and mechanical resistance. Additionally, unidirectional (UD) tapes and/or organosheets (6) can be overmoulded within the body wall to offer localized reinforcement, ensuring durability in high-stress regions.

In an embodiment, at least one crash box (8) is moulded as an integral part of the beam part, as depicted in Figure 2. The crash box (8) functions as an energy-absorbing element, designed to dissipate impact forces and improve vehicle crash performance. This integrated design contributes to enhanced safety while maintaining a lightweight construction, easy disassembling and recycling.

The injection-moulded beam part (1) is manufactured using an injection mould (10), as illustrated in Figure 3. The mould (10) comprises a cavity (11) that defines the external shape of the beam part, at least one injection gate (12) for introducing molten polymer (10), a work-fluid injection inlet for injecting the work-fluid (13), and a projectile injection system configured to introduce and guide rigid projectiles (9) within the mould cavity. The mould (10) is designed to accommodate projectiles (9) of different shapes and sizes, allowing for the production of beams with varying structural characteristics. The injection method involves introducing a plurality of fluid-driven rigid projectiles (9) into the mould cavity, after the step of injecting molten polymer (10) through an injection gate (12) into the mould cavity. The work-fluid (13) then propels the projectiles (9) through the molten polymer, forming the hollow channels (4). Once the channels (4) are formed, the polymer is cooled and demoulded to obtain the final beam part.

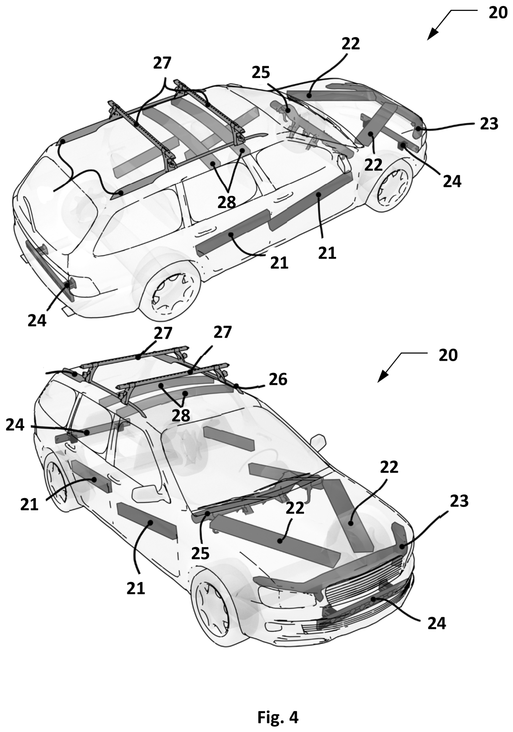

As illustrated in Figures 4 and 5, the injection-moulded beam part (1) can be integrated as various structural components of a vehicle (20), including both interior beams, which are embedded within the structural framework, and exterior beams, which are exposed and serve as protective or load-bearing elements. The beams may include a door panel beam (21), a bonnet beam (22), a bonnet latch beam (23), a bumper beam (24), a cross beam (25), a roof rail beam (26), a roof rack bar beam (27), a roof bow beam (28), a side step beam (29), a roll bar beam (30), and a bull bar beam (31). The injection-moulded beam parts can be comprised in any type of vehicle, including but not limited to pickup trucks, SUVs, crossovers, sedans, and commercial vehicles. These beams may contribute to the internal or external reinforcement of the vehicle, enhancing stiffness and crash resistance for passengers' safety. Exterior beams are directly exposed to external impacts and environmental conditions, requiring high impact resistance and optimized energy absorption. The ability to customize the beam's internal structure, including the shape and arrangement of hollow channels (4) and reinforcement elements, allows for optimization based on specific application requirements within the vehicle.

In one embodiment, the material used for the body (2) of the injection-moulded part is selected from a variety of thermoplastics, including polyethylene (PE), polypropylene (PP), polyethylene terephthalate (PET), polybutylene terephthalate (PBT), polycarbonate (PC), acrylonitrile butadiene styrene (ABS), acrylonitrile styrene acrylate (ASA), styrene acrylonitrile (SAN), polyarylamide (PARA), polyamide (PA), polymethyl methacrylate (PMMA), polyacetal (POM), and polytetrafluoroethylene (PTFE). Preferably, the thermoplastic material is selected from bio-based, recycled-content, or recyclable thermoplastics, supporting sustainable automotive manufacturing practices.

The present disclosure provides an innovative approach to producing lightweight, structurally optimized beam parts through a combination of fluid injection, projectile injection moulding and, in particular, continuous fibres. The integration of hollow channels (4), a possible lattice-like rib structure (7), possible continuous fibre reinforcements (5) and localized UD tape and organosheet reinforcements (6) results in a high-performance beam part suitable for various automotive applications. By leveraging the controlled movement of rigid projectiles (9) within a molten polymer (10), the method enables precise control over the internal structure of the beam while maintaining manufacturing efficiency and material sustainability. The ability to adapt the structural characteristics of the beam to both interior and exterior applications further enhance its versatility and applicability across different vehicle designs, weight and performance required.

In an embodiment, the rigid projectile is made of a polymer, preferably a thermoplastic polymer.

In an embodiment, the cross-section of the rigid projectile can be completely circular but with different diameters or with slits for the internal rib. For example, in figure 6, it is illustrated just one representative rib, but it is possible to have ribs around the entire perimeter to increase rigidity. In other embodiments, the cross-section of the beam can have trapezoidal or quadrangular cross-section projectiles.

### Experimental Data

The following examples and experimental data illustrate the performance and advantages of the disclosed beam. For obtaining this experimental data, it was used a bumper beam.

### Example 1: Mechanical Testing

### Automotive beam as a Bumper beam

| **Test designation** | **Standard/Test conditions** | **Results** |
|---|---|---|
| | UN-ECE-R42 4 km/h Low-speed-impact test (notch test) | No damage allowed on Bumper Beam or elements held |
| Front impact test | AZT Test-40% offset 16 km/h Rigid barrier | Some damage but without affecting the remaining structural parts |
| | At 30° UN-ECE R42 2.5 km/h Low-speed impact test (notch test) | No damage allowed on Bumper Beam or elements held |
| Mechanical fatigue tests Fc test: vibration (sinusoidal) | UNE-EN 60068-2-6 Vibration conditions: Frequency range: 5-50HZ Sinus maximum acceleration: 1G Scanning speed: 0.5Hz/s Test axis: Z Duration per axis: 1h | No deterioration of the part neither functionalization |
| Mechanical fatigue tests Fh test: Broad band random vibration | UNE-EN 60068-2-64Vibration conditions: Random signal Use a single-axis accelerometer | No deterioration of the part neither functionalization |

### Example 2: Functional characteristics

### Automotive beam as a Bumper beam

| **Test designation** | **Standard/Test conditions** | **Results** |
|---|---|---|
| Low-temperature behaviour | Aging temperature: (-30 ±2) °C; aging period: 4 h | Bumper Beam fully functional at low temperatures. No Cracks or similar damage on the Bumper Beam. |

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable.

The following dependent claims further set out particular embodiments of the disclosure.

## Claims

1. An injection-moulded part (1) obtainable by fluid injection moulding, comprising:
a body (2) extending along a longitudinal axis; and
a hollow channel (4) formed within a wall (3) of the body (2) and extending along the longitudinal axis of the body (2);
wherein the hollow channel (4) and respective wall (3) are obtainable by a moving rigid projectile (9) driven by a work-fluid (13) along an injection mould cavity (11) during fluid injection moulding; and
wherein a cross-section of the rigid projectile (9) has been pre-defined for a predetermined thickness of the wall (3) producing different wall thicknesses and internal channel shape without modifying the mould.

2. The injection-moulded part according to the previous claim, comprising:
a plurality of hollow channels (4) each formed within a wall (3) of the body (2) and extending along the longitudinal axis of the body (2);
wherein each of the plurality of hollow channels (4) and respective walls are obtainable by a moving rigid projectile (9) driven by a work-fluid along the injection mould cavity (11) during fluid injection moulding; and
wherein a cross-section of the rigid projectile (9) has been preselected for a predetermined thickness of the wall, preferably wherein the work-fluid for fluid injection is selected from a gas, such as nitrogen or carbon dioxide, a liquid, such as water, or a gas-liquid mixture.

3. The injection-moulded part according to the previous claim, further comprising a web of ribs (7) connecting between walls of the body.

4. The injection-moulded part according to any of the previous claims, further comprising a plurality of continuous fibre profiles (5) arranged longitudinally within the body of the injection-moulded part for mechanical reinforcement, preferably wherein each one of the plurality of fibre profiles (5) comprises at least one of carbon fibres, glass fibres, aramid fibres, basalt fibres, boron fibres, Polyester fibres, ceramic fibers, natural fibres or a combination thereof.

5. The injection-moulded part according to any of the previous claims, further comprising unidirectional (UD) tapes and/or organosheets (6) overmoulded within a body wall for localized mechanical reinforcement with a certain thickness and composition preselected to fit with an exact stiffness required, preferably wherein the unidirectional (UD) tapes and/or organosheets (6) comprise at least one of carbon fibres, glass fibres, aramid fibres, basalt fibres, boron fibres, ceramic fibers, Polyester fibres, natural fibres or a combination thereof.

6. The injection-moulded part according to any of the previous claims, further comprising at least one crash box (8) moulded as an integral part of said injection-moulded part, for impact energy absorbing.

7. The injection-moulded part according to any of the previous claims, wherein the body (2) is made of a material selected from the group consisting of polymers groups such as: polyethylene group (PE), polypropylene group (PP), polyethylene terephthalate group (PET), Polybutylene terephthalate group (PBT), polycarbonate group (PC), Acrylonitrile Butadiene Styrene group (ABS), acrylonitrile styrene acrylate (ASA), styrene acrylonitrile (SAN), polyarylamide group (PARA), polyamide group (PA), Polymethyl methacrylate group (PMMA), Polyacetal group (POM), Polytetrafluoroethylene (PTFE) or mixtures thereof; preferably wherein the thermoplastic material is a bio-thermoplastic, recycled content-thermoplastic and/or a recyclable- thermoplastic.

8. The injection-moulded part according to any of the previous claims, wherein at least one hollow channel (4) is configured to accommodate cables for electrical components or other functional elements.

9. An injection-moulded beam part comprising the injection-moulded part, preferably wherein the injection-moulded beam part is applied in an automotive component, consumer good, appliance, furniture, electronics housing, and packaging, more preferably wherein the injection-moulded beam part is as a door panel beam (21), a bonnet beam (22), a bonnet latch beam (23), a bumper beam (24), a cross beam (25), a roof rail beam (26), a roof rack bar beam (27), a roof bow beam (28), a side step beam (29), a roll bar beam (30), or a bull bar beam (31).

10. A vehicle (20) comprising at least one injection-moulded beam part (1; 21, 22, 23, 24, 25, 26, 27, 28, 29, 30, 31) according to the previous claim.

11. An injection mould for manufacturing an injection-moulded part (1; 21, 22, 23, 24, 25, 26, 27, 28, 29, 30, 31) according to any of the claims 1-10, the mould comprising:
a cavity (11) defining an external shape of the part;
at least one injection gate (12) for introducing a polymer (10) into the cavity;
at least one work-fluid injection inlet for introducing a work-fluid (13) into a molten polymer (10) during moulding;
at least one projectile injection system configured to introduce at least one fluid-driven rigid projectile (9) into the molten material to form at least one hollow channel (4) along a longitudinal axis of the beam;
wherein a cross-section of the rigid projectile (9) has been pre-defined for a predetermined thickness of the wall (3) to enable the production of parts with varying structural characteristics within the same mould.

12. An injection method for manufacturing an injection-moulded part according to any of the claims 1-10, the method comprising the steps of:
providing an injection mould according to the previous claim;
introducing at least one rigid projectile (9) into the mould cavity (11);
injecting a molten polymer (10) into the mould cavity (11) through an injection gate (12) of the mould;
injecting a work-fluid (13) to displace said at least one rigid projectile (8) to create at least one hollow channel (4) extending along a longitudinal axis of the mould cavity;
cooling and demoulding the mould to obtain an injection-moulded part;
wherein a cross-section of the rigid projectile (9) has been preselected for a predetermined thickness of the wall (3) to enable the production of beams with varying structural characteristics within the same mould.

13. The method according to the previous claim, further comprising introducing a plurality of continuous fibre profiles (5) into the mould cavity (11) before polymer injection for mechanical reinforcement of the injection-moulded part obtained.

14. The method according to any of the previous claims 12 to 13, further comprising introducing unidirectional (UD) tapes and/or organosheets into the mould cavity (11) before polymer injection for localized mechanical reinforcement of the injection-moulded part obtained.

15. The method according to any of the previous claims 12 to 14, further comprising forming ribs (7) within the obtained part through controlled displacement of the work-fluid; wherein the mould comprises variable thickness regions to guide a flow of molten polymer and work-fluid, preferably wherein the work-fluid (13) is selected from a gas, such as nitrogen or carbon dioxide, a liquid, such as water, or a gas-liquid mixture.
